# EUROPÄISCHE PATENTSCHRIFT

(11) **EP 3 401 977 B1**
(45) Veröffentlichungstag und Bekanntmachung des Hinweises auf die Patenterteilung: **17.03.2021**
(21) Anmeldenummer: 18168792.2
(22) Anmeldetag: 23.04.2018
(51) Int. Cl.: B60L 50/60, B60L 53/80, B60L 58/13, H01M 10/613, H01M 10/625, H01M 10/6557, H01M 2/10, H01M 10/48, H01M 10/44, H02J 7/00, H01M 10/6555, B60L 50/64

(54) **STATIONÄRES LAGERSYSTEM FÜR BATTERIEN**
STATIONARY STORAGE SYSTEM FOR BATTERIES
SYSTÈME DE STOCKAGE DE BATTERIE STATIONNAIRE

(30) Priorität: 08.05.2017 DE 102017207691
(43) Veröffentlichungstag der Anmeldung: 14.11.2018
(73) Patentinhaber: Fritz GmbH & Co. KG, 74193 Schwaigem (DE)
(72) Erfinder: Doll, Fredy, 77855 Achern (DE); Fritz, Wolfram, 74193 Schwaigern (DE); Nohe, Andreas, 74834 Elztal (DE); Sanna, Gerardo, 73547 Lorch (DE)
(74) Vertreter: Patentanwaltskanzlei Cartagena

(56) Entgegenhaltungen:
- EP-A1- 2 159 862
- EP-A1- 2 634 835
- EP-A1- 2 797 158
- EP-A1- 2 919 293
- DE-A1-102012 222 787
- GB-A- 2 330 959
- KR-A- 20070 006 000
- US-A1- 2016 118 697
- US-A1- 2017 113 661

## Beschreibung

### ANWENDUNGSGEBIET UND STAND DER TECHNIK

Die Erfindung betrifft ein stationäres Lagersystem für Fahrzeugantriebsbatterien, insbesondere für die Lagerung solcher Batterien vor Montage in einem Kraftfahrzeug im Zuge der Fahrzeugherstellung.

Bei der zunehmenden Herstellung von Elektro-Fahrzeugen wird eine Möglichkeit benötigt, die hierfür vorgesehenen Antriebs-Kraftfahrzeugbatterien beim Hersteller der Batterie vor Auslieferung bzw. beim Fahrzeughersteller vor Einbau der Batterie zwischenzulagern. Hierbei ist zu berücksichtigen, dass von solchen Batterien grundsätzlich eine erhöhte Gefahr ausgeht, da sie durch die Handhabung im Zuge der Anlieferung und Zwischenlagerung und aufgrund ihrer Ladung und ihrer chemischen Bestandteile grundsätzlich als brandgefährdet zu gelten haben.

Aus dem Stand der Technik sind verwandte Lagersysteme bekannt, die jedoch mehrheitlich einem abweichenden Zweck dienen, nämlich der Lagerung von Antriebs-Kraftfahrzeugbatterien die als Wechselbatterien ausgestaltet sind und daher regelmäßig außerhalb des Kraftfahrzeuges in hierfür vorgesehenen Lagersystemen aufbewahrt und geladen werden. Entsprechende Regalsysteme sind beispielsweise aus der US 2015/0307068 A1 bekannt.

Regalsysteme mit der Möglichkeit des Ladens von Batterien in Einzelfächern ergeben sich darüber hinaus auch aus der WO 2013/144951 A1 und der US 2007/184339 A1. Aus der US 2007/184339 A1 ist es weiterhin auch bekannt, Einzelfächer mit Temperatursensoren zu versehen.

Aus der GB 2330959 A ist ein Ladeschrank für Batterien vorgesehen, der mit einem Gassensor ausgestattet ist, um im Falle erfassten Gases aus Batterien eine Ventilation zu starten.

Aus der EP 2 797 158 A1 ist ein Schrank mit einer Mehrzahl von Batteriefächern bekannt, wobei die Batteriefächer jeweils über individuelle Gassensoren und individuell steuerbare Ventilatoren verfügen, so dass für den Fall der Detektion von austretendem Gas in einem Batteriefach der zugeordnete Ventilator gestartet werden kann.

Die EP 2 159 862 A1 beschreibt ein Stromversorgungssystem für den Bahnverkehr, im Rahmen dessen ebenfalls Gassensoren offenbart sind, mittels derer ein Schaden an Batteriezellen ermittelbar ist.

Aus der EP 2 634 835 A1 ist ein Batteriesystem bekannt, bei dem auslaufender Elektrolyt mehrerer Fächer zusammengeführt und gebündelt detektiert wird.

### AUFGABE UND LÖSUNG

Aufgabe der Erfindung ist es, ein Lagersystem für Batterien zur Verfügung zu stellen, das auf die spezifischen Anforderungen der Batterien als Gefahrgut angepasst ist und welches zur Aufbewahrung der Batterien vor Einbau in ein Kraftfahrzeug dient.

Diese Aufgabe wird gemäß der Erfindung durch ein stationäres Lagersystem gelöst, welches wie folgt ausgestaltet ist.

Das Lagersystem verfügt über eine Mehrzahl von Lagerbereichen für Fahrzeugantriebsbatterien, die gegeneinander durch Trennwandungen und/oder Böden abgegrenzt sind. Erfindungsgemäß ist das Lagersystem dabei in Art eines Regals mit einer Mehrzahl von rasterartig nebeneinander (horizontale Reihen) und übereinander angeordneten Lagerbereichen (vertikalen Reihen) ausgestaltet ist.

Als Lagersystem im Sinne der Erfindung meint insbesondere ein System, welches eine bauliche Einheit bildet. Die mehreren Lagerbereiche werden also von gemeinsamen strukturellen Elementen eines einheitlichen Lagersystems gebildet und/oder getragen. Insbesondere handelt es sich um das oben beschriebene Lagersystem in Form eines Regals.

Jeder Lagerbereich ist zur Aufnahme mindestens einer Fahrzeugbatterie vorgesehen, wobei im Kontext der vorliegenden Beschreibung unter einer Fahrzeugantriebsbatterie das einheitliche und allenfalls in wenige Teileinheiten untergliederte Batteriemodul eines Kraftfahrzeuges verstanden wird. Eine Fahrzeugbatterie in diesem Sinne weist eine Kapazität von mindestens 5 KWh und eine Masse von mindestens 100 kg auf, insbesondere eine Kapazität von mindestens 5 KWh und eine Masse von mindestens 200 kg. Die Lagerbereiche weisen Maße auf, die zur Aufnahme solcher Fahrzeugantriebsbatterien geeignet sind, insbesondere eine Größe von mindestens 150 cm x 100 cm x 20 cm. Vorzugsweise beträgt die Größe der Lagerbereiche jeweils mindestens 200 cm x 150 cm x 20 cm, so dass auch die Aufnahme von Fahrzeugbatterien größeren Typs möglich ist.

Das Lagersystem verfügt über ein Belüftungssystem zur individuellen Gaszuführung und/oder Gasabsaugung aus den Lagerbereichen sowie über eine Mehrzahl von Gassensoren, die den individuellen Gaszuführungen bzw. Gasabsaugungen derart zugeordnet sind, dass mehrere Gassensoren jeweils unterschiedlichen Untergruppen aus der Gesamtmenge der Lagerbereiche zugeordnet sind.

Bei einem erfindungsgemäßen Lagersystem zur Lagerung von Fahrzeugbatterien ist demnach bestimmungsgemäß vorgesehen, dass ein Belüftungs- bzw. Entlüftungssystem integriert ist, durch welches verschiedene voneinander getrennte Lagerbereiche einzeln mit Gas, insbesondere Luft, versorgt werden können bzw. Gas, insbesondere Luft, aus diesen Bereichen abgeführt werden kann. Die hierdurch erzeugte Gas- bzw. Luftbewegung dient dem Kühlen der jeweiligen Batterie, jedoch mittels der genannten Gassensoren auch der Erkennung des aktuellen Status der Batterie und möglicher Störfälle.

Jeweils Gruppen von Gaszuführungen oder Gasabsaugungen mehrerer Lagerbereiche gemeinsam ist hierfür ein Gassensor zugeordnet, der den Gasstrom in Hinblick auf Eigenschaften untersucht, die zur Steuerung des Lagersystems bzw. zur Informationsweitergabe an eine Leitzentrale benötigt werden. Dabei kann es sich um Eigenschaften handeln, die im Rahmen des regulären Betriebs eine Erfassung sinnvoll erscheinen lassen, beispielsweise die Temperatur von aus dem Lagerbereich abgeführtem Gas, um in Reaktion auf eine hierdurch detektierte ladebedingte Batterieerwärmung den Ladestrom zu senken. Es kann sich jedoch auch um Eigenschaften handeln, deren Detektion Rückschlüsse darüber zulässt, dass eine kritische Situation eingetreten ist, beispielsweise das Austreten chemischer Bestandteile aus dem chemischen System einer Fahrzeugantriebsbatterie oder eine Brandsituation.

Es liegt auf der Hand, dass es von besonderem Wert ist, die aus den einzelnen Lagerbereichen abgeführten Gasströme zu untersuchen, da hier Auswirkungen in Hinblick auf Temperatur und aus der Batterie austretende Bestandteile vergleichsweise klar ablesbar sind. Jedoch kann auch die Untersuchung des Eingangsstromes von Wert sein, da beispielsweise eine Verbrennung in einem Lagerbereich zu einem erhöhten Sauerstoffbedarf und daher zu einem vergrößerten Gasstrom führen kann.

Erfindungsgemäß ist jeweils ein gemeinsamer Gassensor einer horizontal ausgerichteten Reihe von Lagerbereichen und jeweils ein gemeinsamer Gassensor einer vertikal ausgerichteten Reihe von Lagerbereichen zugeordnet.

Durch die Gestaltung mit einem gemeinsamen Gassensor für eine horizontale oder vertikale Reihe von Lagerbereichen wird die Anzahl der erforderlichen Sensoren gesenkt. Durch das Anbinden von Lagerbereichen an mehrere getrennt voneinander untersuchte Gasabsaugungen ist es möglich, mittels solcher gruppenweise zugeordneter Gassensoren dennoch eine Einzellokalisierung des verursachenden Lagerbereichs durchzuführen, weil jeder vertikalen Reihe und jeder horizontalen Reihe des Lagerbereichs ein jeweils gemeinsamer Gassensor zugeordnet wird. Besondere Eigenschaften des Gasstroms, die sich dann am Gassensor einer bestimmten vertikalen und einer bestimmten horizontalen Reihe ermitteln lassen, erlauben einen Rückschluss auf den verursachenden Einzelbereich. Diese Art der präzisen Lokalisierung gestattet insbesondere auch die automatisierte Einleitung von Gegenmaßnahmen im betroffenen Bereich, so bspw. einen Löschvorgang mittels einer lagerbereichsspezifischen Besprenkelungsanlage oder das automatisierte Herausholen der Batterie aus dem Lagerbereich.

Bei mindestens einem Gassensor kann es sich um einen Sensor zur Erkennung von Bestandteilen des aus dem Lagerbereich abgesaugten Gasstroms handeln. Weiterhin kann es sich um einen Temperatursensor zur Erfassung der Temperatur des abgesaugten Gasstroms, und/oder um einen Durchflusssensor zur Erfassung des Volumenstroms des abgesaugten oder zugeführten Gasstroms handeln.

Ein Temperatursensor gestattet es, die Erhöhung der Temperatur des abgesaugten Gasstroms zu erkennen, wobei diese durch einen regulären Ladevorgang selbst ebenso verursacht sein kann wie auch durch einen in einem Lagerbereich entstandenen Brand. Das Maß der Temperaturerhöhung und/oder die Daten weiterer Sensoren lässt Rückschlüsse auf die eingetretene Situation zu.

Die Verwendung eines Gassensors zur Erkennung von Bestandteilen des Gasstroms kann zweckmäßig sein, da zu den Störfällen, die durch ein erfindungsgemäßes Lagersystem erkannt werden sollten, insbesondere auch das Austreten von Bestandteilen des chemischen Systems der Batterien gehört. Entsprechende Gassensoren sind allgemein erhältlich, wobei diese üblicherweise jeweils zur Erkennung eines spezifischen Gases ausgebildet sind. Je nach Typ der zu lagernden Batterie kann es daher sinnvoll sein, mehrere solche Gassensoren im selben Bereich des Lagersystems vorzusehen, um auch bei unterschiedlichen potenziell im Lagersystem gelagerten Fahrzeugantriebsbatterien jeweils ein Versagen anhand der Gaszusammensetzung erkennen zu können.

Die Verwendung eines Sensors zur Erfassung des Volumenstroms ist insbesondere für oben genannten Fall zweckmäßig, bei dem der durch eine Verbrennung verursachte erhöhte Gasstrom detektiert werden soll, um Maßnahmen gegen den Brand einleiten zu können.

Das Lagersystem verfügt über eine Mehrzahl von Lagerbereichen für Fahrzeugantriebsbatterien. Diese Lagerbereiche sind vorzugsweise in mindestens zwei Ebenen vertikal übereinander angeordnet und gegeneinander durch Zwischenböden getrennt. Die Zwischenböden sind zumindest zum Teil als Doppelböden mit einem oberen Tragboden und einem unteren Deckenboden ausgestaltet, zwischen denen ein Freibereich vorgesehen ist.

Bei dieser Gestaltung ist somit vorgesehen, dass die horizontal erstreckten Zwischenböden, die zwischen Lagerbereichen oberhalb und unterhalb der Zwischenböden angeordnet sind, durch voneinander beabstandete Böden, nämlich den oberen Tragboden und den unteren Deckenboden, gebildet werden. Zwischen diesen ist ein Freibereich mit einer lichten Weite von vorzugsweise einigen Zentimetern vorgesehen.

Diese Gestaltung der Zwischenböden als Doppelböden führt primär zu einem erhöhten Maß an Sicherheit. In einem Brandfalle wird hiervon zunächst nur der unter der Batterie angeordnete Tragboden betroffen sein. Erst wenn dieser versagt, lastet die brennende Batterie auf dem darunter angeordneten Deckenboden.

Der Freibereich ist darüber hinaus gut geeignet, um hier Zuführungen oder Abführungen vorzusehen, beispielsweise Fluidzuführungen zur Speisung von Besprenkelungsanlagen oder elektrische Versorgungsleitungen und Datenleitungen. Diese werden vorzugsweise auf dem unteren Deckenboden verlegt, so dass sie im Falle eines Brandes in einem Lagerbereich besonders lange hiervon untangiert bleiben.

Insbesondere ist der Freibereich zwischen dem Tragboden und dem Deckenboden der Zwischenböden geeignet, um der Zuführung oder Abführung von Gas, insbesondere Luft, in den Lagerbereich bzw. aus dem Lagerbereich zu dienen. Dies wird im Weiteren noch näher erläutert.

Vorzugsweise sind in einer Ebene mindestens zwei Lagerbereiche horizontal nebeneinander angeordnet und durch eine Trennwandung voneinander getrennt. Dabei ist der Freibereich unterhalb oder oberhalb der Tragböden dieser mindestens zwei Lagerbereiche als einheitlicher Freibereich ohne trennende Zwischenwandung gestaltet.

In diesem gemeinsamen Freibereich ist mindestens ein Sensor angeordnet, der physikalische Größen der mindestens zwei Lagerbereiche erfasst, wobei insbesondere vorzugsweise der Sensor durch eine Wärmebildkamera gebildet wird, die derart ausgerichtet ist, dass die Erwärmung des Tragbodens oberhalb des Freibereichs oder des Deckenbodens unterhalb des Freibereichs nach Lagerbereich differenzierbar erfasst werden kann.

Insbesondere sind die Freibereiche derart frei von Zwischenstrukturen ausgebildet, dass eine freie Sichtlinie über die jeweiligen Freibereiche hinweg besteht, so dass diese auf diese Weise einen gemeinsamen Freibereich bilden, der von einem Sensor, insbesondere einem optisch arbeitenden Sensor, überwacht werden kann. Die genannte Wärmebildkamera wird hierfür als besonders vorteilhaft angesehen. Diese kann an einem Stirnende des gemeinsamen Freibereichs angeordnet sein und somit Tragböden oder Deckenböden der einzelnen den gemeinsamen Freibereich bildenden Freibereiche überblicken und so eine Temperaturerhöhung unter Erkennung des jeweils betroffenen Lagerbereichs melden.

Zwischen dem Deckenboden und dem Tragboden des Zwischenbodens ist vorzugsweise ein Gaszuführungskanal oder ein Gasabführungskanal angeordnet. Die Zwischenböden bilden dabei, begrenzt durch ihre oberen Tragböden und ihre unteren Deckenböden, vorzugsweise den Gaszuführungskanal oder Gasabführungskanal.

Zwar ist bereits die Anordnung von durch Rohre gebildete Gasabführungs- oder Gaszuführungskanäle im Freibereich von Vorteil. Besonders vorteilhaft ist es jedoch, wenn der Tragboden und/oder der Deckenboden selbst die Begrenzung des jeweiligen Kanals bilden, so dass insbesondere dieser nach oben und unten durch diese Böden gegenüber den Lagerbereichen getrennt sein kann. Grundsätzlich ist es möglich, hier, gegebenenfalls durch Vorsehen eines weiteren Bodens, die Gaszuführung und die Gasabführung zu realisieren. Denkbar ist es auch, die Zwischenböden alternierend als Gaszuführungskanäle und Gasabführungskanäle zu verwenden. Von Vorteil ist es jedoch, wenn nur die Gasabführung durch den Freibereich im Zwischenboden erfolgt, während die Gaszuführung insbesondere vorzugsweise von vorne erfolgt, da die Lagerbereiche vorzugsweise nach vorne hin offen sind. Vorzugsweise weisen die Lagerbereiche einer horizontalen oder vertikalen Reihe von Lagerbereichen einen gemeinsamen Gaszuführungskanal oder Gasabführungskanal auf. Dabei ist jedem Lagerbereich eine individuell einstellbare Drossel zwischen dem gemeinsamen Gaszuführungskanal oder Gasabführungskanal und dem Lagerbereich zugeordnet, wobei die Drossel zur manuellen oder motorischen Verstellung ausgebildet ist.

Die genannten Drosseln, die insbesondere vorzugsweise in Form von bezüglich des Strömungswiderstandes einstellbaren Gittern ausgebildet sind, gestatten es, den Strömungswiderstand zwischen einem Lagerbereich und einem für mehrere Lagerbereiche gemeinsamen Gaszuführungskanal oder Gasabführungskanal einzustellen. Das motorische Einstellen kann dabei von Vorteil sein, um in Reaktion auf Sensordaten die Gaszuführung oder Abführung zu beeinflussen. In Hinblick auf diese den Einzellagerbereichen zugeordneten Drosseln ist es jedoch bei einer bevorzugten Ausgestaltung vorgesehen, dass diese zur manuellen Einstellung vorgesehen sind, da sie insbesondere dem Zweck dienen, die unterschiedliche Anordnung der Lagerbereiche am gemeinsamen Gaszuführungs- oder Gasabführungskanal auszugleichen, so dass durch jeweils angepasste Einstellungen der Drosseln erreicht wird, dass eine jeweils gleiche Luftmenge je Zeiteinheit den Lagerbereichen zugeführt wird oder aus diesen abgeführt wird.

Alternativ oder zusätzlich können mehrere gemeinsame Gaszuführungskanäle oder Gasabführungskanäle jeweils einer horizontalen oder vertikalen Reihe von Lagerbereichen mit einem Hauptgaszuführungskanal oder Hauptgasabführungskanal verbunden sein. Jedem gemeinsamen Gaszuführungskanal oder Gasabführungskanal ist dabei eine individuell einstellbare Drossel zwischen den gemeinsamen Gaszuführungskanälen oder Gasabführungskanälen einerseits und dem Hauptgaszuführungskanal oder Hauptgasabführungskanal andererseits zugeordnet, wobei diese Drossel zur manuellen oder motorischen Verstellung ausgebildet ist.

Bei dieser Gestaltung ist demnach vorgesehen, dass mehrere Gaszuführungs- oder Gasabführungskanäle vorgesehen sind, an denen jeweils mehrere Lagerbereiche angeschlossen sind. Diese mehreren Gaszuführungskanäle oder Gasabführungskanäle verfügen, vorzugsweise zusätzlich zu den oben bereits genannten Drosseln, über weitere Drosseln im Bereich ihrer Anbindung an den zentralen Hauptgaszuführungskanal oder Hauptgasabführungskanal. Diese Drosseln, die insbesondere vorzugsweise als Drosselklappen ausgebildet sind, sind vorzugsweise zur motorischen Verstellung vorgesehen, um sie in Reaktion auf erfasste Sensordaten derart einstellen zu können, dass insbesondere im Falle kritischer Situationen wie eines Brandes einer solchen kritischen Situation entgegengewirkt wird.

Das Lagersystem verfügt vorzugsweise über einen offenen oder geschlossenen Kreislauf, innerhalb dessen aus einem Lagerbereich abgesaugtes Gas zumindest teilweise und vorzugsweise nach einem Kühlvorgang den Lagerbereichen wieder zugeführt wird.

Unter einem offenen Kreislauf wird dabei verstanden, dass der Raum, in dem das Lagersystem aufgestellt ist, Teil dieses Kreislaufs ist. Die den Lagerbereichen zugeführte Luft wird dabei demnach dem gemeinsamen umgebenden Raum entnommen und die aus den Lagerbereichen abgeführte Luft wiederum in den Raum abgegeben. Vorzugsweise ist ein Kühlaggregat vorgesehen, welches die abgesaugte Luft vor der Rückführung in den Raum kühlt. Ein solches Kühlaggregat ist aber zwingend erforderlich und muss insbesondere nicht Teil des Lagersystems selbst sein.

Unter einem geschlossenen Kreislauf wird verstanden, dass zumindest zum überwiegenden Teil dieselbe Luft mehrfach den Lagerbereichen zugeführt wird, wobei es für die Definition eines geschlossenen Kreislaufs im Sinne der Erfindung unschädlich ist, wenn bis zu 25% der Luftmenge bei jedem Zyklus gegenüber der Umgebung ausgetauscht werden, um eine Frischluftzufuhr zu gewährleisten und ein langsames, jedoch unkritisches, Ansteigen von Gaszusammensetzungswerten in der umgewälzten Luft zu verhindern. Im Falle eines geschlossenen Kreislaufs umfasst das Lagersystem vorzugsweise ein Kühlaggregat. Insbesondere vorzugsweise ist dies unmittelbar Teil des Regalsystems und örtlich an diesem vorgesehen.

Die Lagerbereiche sind vorzugsweise jeweils mit einem Gasauslass im Bereich eines Tragbodens ausgestattet, wobei dieser insbesondere vorzugsweise durch ein manuell einstellbares Drosselgitter abgedeckt ist.

Durch den Gasauslass im Bereich des Tragbodens und somit unterhalb des jeweiligen Lagerbereichs lassen sich besonders vorteilhaft Gase erkennen, die schwerer als die umgebende Luft sind und im Schadensfalle aus einer gelagerten Fahrzeugantriebsbatterie austreten können. Zudem wurde festgestellt, dass die Erwärmung von Batterien beim Laden insbesondere an deren Unterseite auftritt und hier zweckmäßigerweise in besonders hohem Maße gekühlt wird. Durch den Gasaustritt am Tragboden kann diese Unterseite besonders vorteilhaft gekühlt werden. Die Batterie oder der Aufnahmebehälter weisen vorzugsweise Füße auf, durch die Beabstandung der Unterseite der Batterie bzw. des Aufnahmebehälters vom Tragboden gewährleistet ist, so dass Luft hier hinströmen und durch den Gasauslass austreten kann. Es kann jedoch auch vorgesehen sein, dass der Tragboden selbst beidseitig des Gasauslasses über Erhöhungen wie beispielsweise Führungsschienen verfügt, auf denen die Batterie oder der Aufnahmebehälter aufgesetzt wird, um den Gasauslass nichtzu blockieren.

Das erfindungsgemäße Lagersystem ist als stationäres Lagersystem ausgestaltet, also zur Aufstellung im Bereich eines Lagers, beispielsweise in einer Fertigungs- oder Lagerhalle beim Hersteller der Fahrzeugbatterien, insbesondere jedoch beim Fahrzeughersteller.

Vorzugsweise ist es in Art eines Regalsystems ausgestaltet, wobei die Lagerbereiche jeweils durch Trennwandungen gegen horizontal auf gleicher Ebene angeordnete benachbarte Lagerbereiche abgegrenzt, durch Böden gegen vertikal oberhalb bzw. unterhalb angeordnete benachbarte Lagerbereiche abgegrenzt und rückseitig durch eine Rückenwandung begrenzt sind. Nur auf der der Rückenwandung gegenüberliegenden Seite sind die Lagerbereiche nach vorne hin offen ausgebildet.

Das stationäre Lagersystem erfindungsgemäßer Art verfügt über ein gemeinsames Gestell mit bodenseitigen Auflageflächen, mittels dessen es aufgestellt wird. Vorzugsweise verfügt es über mindestens vier vertikale Säulen, die insbesondere durch Hohlprofile gebildet sein können. An diesen Säulen sind insbesondere vorzugsweise Profile zum Einlegen der Böden vorgesehen oder anderweitige Mittel zu deren Befestigung vorgesehen. Die Böden selbst sowie die Trennwände zwischen den Lagerbereichen sind insbesondere vorzugsweise als brandhemmende Platten ausgestaltet.

Eine besondere Ausgestaltung des Lagersystems sieht vor, dass dieses gleichsam in Art eines Doppelregals ausgebildet ist, bei dem zwei Regalsysteme der oben beschriebenen und in den nachfolgend erläuterten Figuren dargestellten Art Rücken an Rücken aufgestellt sind oder integral als ein System mit gemeinsamen Strukturelementen, insbesondere Säulenprofilen, ausgebildet ist. Hierdurch lassen sich Teile des Systems gemeinsam verwenden, beispielsweise eine Fördereinrichtung, eine Kühleinrichtung oder auch die genannten Sensoren. Ein solchen Regalsystem würde von zwei einander gegenüberliegenden Seiten be- und entladen.

Es bedarf bei einem bevorzugten Lagersystem, bei dem eine Gasabführung aus den Lagerbereichen durch einen gemeinsamen Kanal vorgesehen ist, die Belüftung jedoch aus dem Raum selbst erfolgt, keiner vollständigen Isolation der Lagerbereiche voneinander. Die Wandungen eines jeden Lagerbereichs, insbesondere also der Tragboden, der Deckenboden und die seitlichen Trennwände sind jedoch vorzugsweise derart zu gestalten, dass die durch die Gasabsaugung abgesogene Luft zumindest mehrheitlich von vorne in den Lagerbereich strömt.

Die Gaszuführung bzw. Gasabführung sind in oben beschriebener Weise vorzugsweise durch Freibereiche in den Zwischenböden realisiert. Diese sind jenseits von bestimmungsgemäßen Einlässen und Auslässen gasdicht auszugestalten.

Die Lagerbereiche weisen, wie eingangs erläutert, zur Aufnahme der Fahrzeugantriebsbatterien vorzugsweise eine Größe von mindestens 150 cm x 100 cm x 20 cm auf. Insbesondere vorzugsweise werden die Batterien jeweils in einzelnen Aufnahmebehältern verstaut, so dass die Lagerbereiche dann entsprechend dimensioniert auszugestalten sind. Wenngleich es nicht als bevorzugt angesehen wird, können die Lagerbereiche auch jeweils zur Aufnahme von zwei oder mehr Batterien, jeweils mit oder ohne Aufnahmebehälter ausgebildet und dimensioniert sein.

Den Lagerbereichen ist vorzugsweise jeweils mindestens ein Ladeanschluss zum Anschließen der Batterie an ein Stromversorgungsnetz des Lagersystems zugeordnet. Obwohl ein erfindungsgemäßes Lagersystem vorzugsweise nicht primär dafür verwendet wird, Batterien hier aufzuladen, ist das Vorsehen eines Ladeanschlusses dennoch zweckmäßig, um den Ladestand von Batterien oberhalb eines Mindestwertes oder innerhalb eines bevorzugten Intervalls zu halten. So kann beispielsweise vorgesehen sein, dass ein Laden erfolgt, wenn der Ladestand der Batterie unter 40% sackt. Da bei Fahrzeugbatterien eine selbstständige Entladung im Bereich von 0,1 bis 0,5% pro Tag nicht unüblich ist und da Batterien in einem erfindungsgemäßen Lagersystem mitunter mehrere Tage gelagert werden, ist ein solcher Ladeanschluss von Vorteil. Vorzugsweise wird der hierüber gelieferte Ladestrom durch eine zentrale Steuereinheit gesteuert, welche im Weiteren noch näher erläutert ist. Alternativ kann jedoch auch eine batterieeigene Ladesteuerung Verwendungfinden.

Die Lagerbereiche weisen jeweils vorzugsweise mindestens eine Schnittstelle zur Kommunikation mit batterieinternen Steuergeräten und/oder Sensoren oder zur Kommunikation mit Aufnahmebehältern zur Aufnahme von Batterien auf.

Die Schnittstelle zur Kommunikation der Lagerbereiche mit den jeweils aufgenommenen Batterien kann in Form einer alleine durch das Einbringen der Batterie in den Ladebereich hergestellten Verbindung oder über eine Kabelverbindung erfolgen. Über diese Schnittstelle ist es möglich, dass eine zentrale Steuereinheit des Lagersystems auch Sensoren innerhalb der Batterien auswertet, beispielsweise um den Füllstand der Batterie oder ihre Temperatur zu erfassen. Wenn die Batterien in Aufnahmebehältern aufgenommen in die Lagerbereiche eingeschoben werden, kann es auch von Vorteil sein, wenn Sensoren der Aufnahmebehälter über die genannte Schnittstelle abgefragt werden. So können insbesondere Temperatursensoren oder Gaszusammensetzungssensoren Teil solcher Aufnahmebehälter sein.

Den Lagerbereichen kann jeweils eine individuelle Besprenkelungsanlage zum Löschen eines Batteriebrandes zugeordnet sein. Individuelle Besprenkelungsanlagen gestatten es dem Lagersystem, frühzeitig und lokal Brände zu löschen, die anhand der genannten Sensoren erkannt worden sind.

Ein erfindungsgemäßes stationäres Lagersystem für Fahrzeugantriebsbatterien weist vorzugsweise eine zentrale Steuereinheit auf, die zur zentralen Entgegennahme der Daten der Gassensoren und ggf. weiterer Sensoren ausgebildet ist.

Die zentrale Steuereinheit ist vorzugsweise unmittelbar in das Lagersystem bzw. am das Lagersystem bildenden Regal integriert. Aber auch eine getrennte Ausgestaltung mit verbindenden Datenleitungen ist möglich.

Die zentrale Steuereinheit ist vorzugsweise zur Weitergabe der entgegengenommenen Daten oder hieraus gewonnener resultierender Daten an eine Leitzentrale oder Brandmeldezentrale ausgebildet. Bei einer solchen Gestaltung wertet die zentrale Steuereinheit die Daten der verschiedenen Gassensoren oder Temperatursensoren aus. Werden diese Daten als kritisch betrachtet, beispielsweise weil sie durch die Leckage an einer Batterie oder einen Brand verursacht werden, kann unmittelbar eine Leitzentrale hierüber informiert werden, um hierüber Maßnahmen zur Bekämpfung des Störfalls einleiten zu können.

Die zentrale Steuereinheit ist vorzugsweise weiterhin zur Steuerung der motorisch einstellbaren Drosseln vorgesehen, die den Lagerbereichen zugeordnet sind und/oder die den gemeinsamen Belüftungskanälen oder Entlüftungskanälen zugeordnet sind. Alternativ oder zusätzlich kann die zentrale Steuereinheit zur Steuerung mindestens einer Fördereinrichtung ausgebildet sein, mittels derer Gas aus einem Lagerbereich abgeführt oder dem Lagerbereich zugeführt werden kann. Auch ist es möglich, die zentrale Steuereinheit zur Steuerung mindestens einer Besprenkelungsanlage auszubilden.

Die zentrale Steuereinheit ist gemäß dieser Weiterbildung somit dafür ausgebildet, gewisse Maßnahmen zur Beeinflussung der Batterien oder Brandbekämpfungsmaßnahmen selbst durchzuführen, insbesondere durch Steuerung der zugeführten oder abgeführten Luft, durch Steuerung des Ladestroms und/oder durch Steuerung einer gemeinsamen oder individueller Besprenkelungsanlagen. Die zentrale Steuereinheit ist vorzugweise dahingehend ausgebildet, dass in Reaktion auf eine Erwärmung einer Fahrzeugantriebsbatterie in dem Lagerbereich, die mittels eines Sensors erfasst wird, die Gaszuführung oder die Gasabführung in diesen Lagerbereich oder in eine vertikale oder horizontale Reihe, in der dieser Lagerbereich angeordnet ist, erhöht wird.

Diese Verhaltensweise findet Anwendung, wenn eine erfasste Erwärmung nicht als kritisch angesehen wird, da sie sich beispielsweise im Rahmen dessen bewegt, was beim Laden der Batterie als Erwärmung zu erwarten ist. In einem solchen Fall kann durch eine erhöhte Gaszufuhr, insbesondere Luftzufuhr, kompensierend eingegriffen werden. Diese erhöhte Gaszufuhr kann durch die Steuerung von Drosseln oder aber auch durch die Erhöhung der Leistung eines zentralen Ventilationssystems erzielt werden.

Für die meisten Batterietypen gilt, dass Temperaturen in einem Bereich zwischen 15° C und 30° C als geeignete Lagertemperatur angesehen werden. Die zentrale Steuereinheit ist daher insbesondere dafür ausgebildet, durch dezentral wirkende Eingriffe, insbesondere an Drosseln, sowie ggf. ergänzend durch zentral wirkende Eingriffe, bspw. mittels eines zentralen Ventilationssystems und/oder eines zentralen Kühlsystems, in allen mit Fahrzeugbatterien bestückten Lagerbereichen entsprechende Temperaturverhältnisse zu bewirken.

Alternativ oder zusätzlich kann die Steuereinheit dahingehend ausgebildet sein, dass in Reaktion auf eine Erwärmung in einem Lagerbereich, die mittels eines Sensors erfasst wird, oder in Reaktion auf die Erfassung einer Konzentration eines Gases im abgeführten Gas, die oberhalb eines hierfür festgesetzten Grenzwertes liegt, oder in Reaktion auf einen Volumenstrom, der oberhalb oder unterhalb von hierfür jeweils festgesetzten Grenzwerten liegt, die Gaszuführung oder die Gasabführung in diesen Lagerbereich oder in eine vertikale oder horizontale Reihe, in der dieser Lagerbereich angeordnet ist, verringert oder unterbunden wird, und/oder eine Besprenkelungsanlage aktiviert wird.

Diese Verhaltensweise ist für das Auftreten einer kritischen Situation vorgesehen. Die Gasabführung bzw. -zuführung zu einem Lagerbereich zu unterbinden, beispielsweise durch eine entsprechende Steuerung der Drosseln, kann die Sauerstoffzufuhr zu einem Brand verringern und somit brandhemmend wirken. Auch die Besprenkelungsanlage stellt eine Möglichkeit dar, einen Brand, insbesondere lokal im betroffenen Lagerbereich selbst, zum Erlöschen zu bringen.

### KURZBESCHREIBUNG DER ZEICHNUNGEN

Weitere Vorteile und Aspekte der Erfindung ergeben sich aus den Ansprüchen und aus der nachfolgenden Beschreibung eines bevorzugten Ausführungsbeispiels der Erfindung, das nachfolgend anhand der Figuren erläutert ist.
Fig. 1 zeigt ein nicht erfindungsgemäßes Lagersystem in einer perspektivischen Ansicht.
Fig. 2 zeigt das Lagersystem der Fig. 1 in gleicher Perspektive bei angenommenem Deckenelement.
Fig. 3 zeigt das Lagersystem in geschnittener Ansicht.
Fig. 4 zeigt ein erfindungsgemäßes Lagersystem.

### DETAILLIERTE BESCHREIBUNG DER AUSFÜHRUNGSBEISPIELE

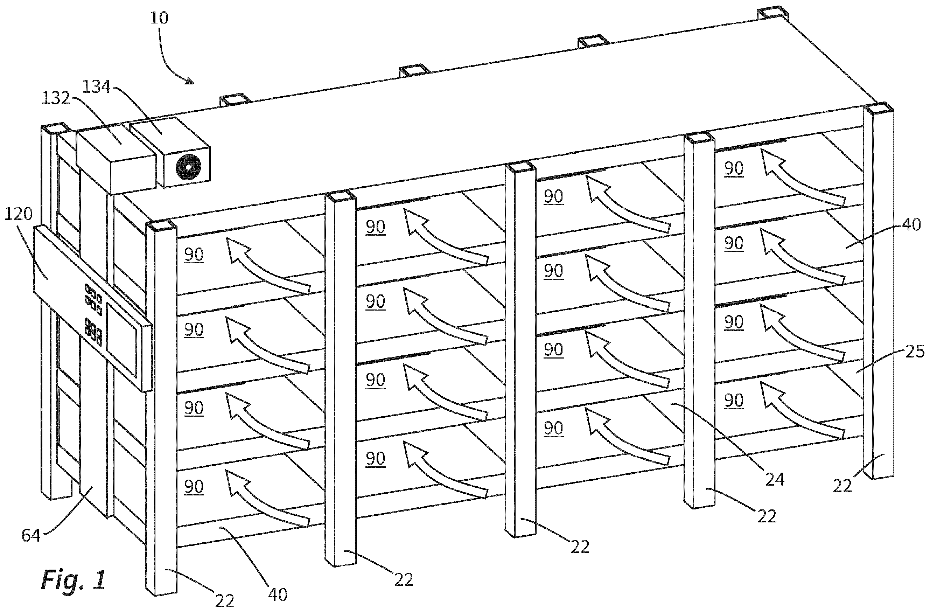

Fig. 1 zeigt ein Lagersystem 10, welches zur Aufnahme von Fahrzeugantriebsbatterien 100 ausgebildet ist. Bei diesen Fahrzeugantriebsbatterien 100 handelt es sich um vergleichsweise große Batteriemodule mit einer Größe von mindestens 150 cm x 100 cm x 20 cm, die in einem Lagersystem 10 der gezeigten und nachfolgend beschriebenen Art insbesondere im Bereich der Fahrzeugmontage zwischengelagert werden, um von hier aus in den Fahrzeugen verbaut zu werden.

Das Lagersystem 10 verfügt über insgesamt 16 Lagerbereiche 90, die zur Aufnahme jeweils eines Batteriemoduls in Form einer Fahrzeugantriebsbatterie 100 der oben beschriebenen Art vorgesehen sind. Diese insgesamt 16 Bereiche sind in Form von horizontalen und vertikalen Reihen zu jeweils vier Lagerbereichen 90 angeordnet.

Diese Lagerbereiche 90 sind an der in Fig. 1 durch Einströmpfeile gekennzeichneten Vorderseite offen und im Übrigen geschlossen ausgebildet, wie anhand der weiteren Figuren noch erläutert wird.

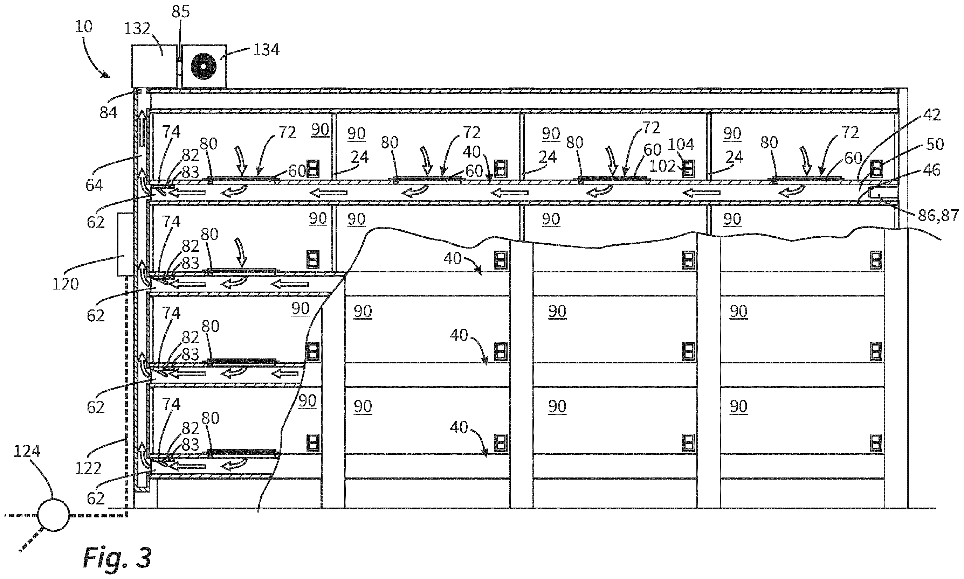

Zur Gewährleistung der Temperierung der Fahrzeugantriebsbatterien in den Lagerbereichen 90 ist ein Belüftungssystem vorgesehen, welches im Weiteren noch erläutert wird und zu dem ein bereits in Fig. 1 ersichtlicher Hauptgasabführungskanal 64, eine Kühleinrichtung 132 und eine Fördereinrichtung 134 gehören. Zur Steuerung dieses Belüftungssystems ist eine zentrale Steuereinheit 120 stirnseitig am Ende des Regalsystems vorgesehen. Es ist ein Strömungssensor 85 vorgesehen, der in Fig. 3 dargestellt ist und der es gestattet, zu erkennen, ob die Fördereinrichtung 132 erwartungsgemäß arbeitet. Es kann sich beispielsweise um einen Druckdifferenzsensor handeln.

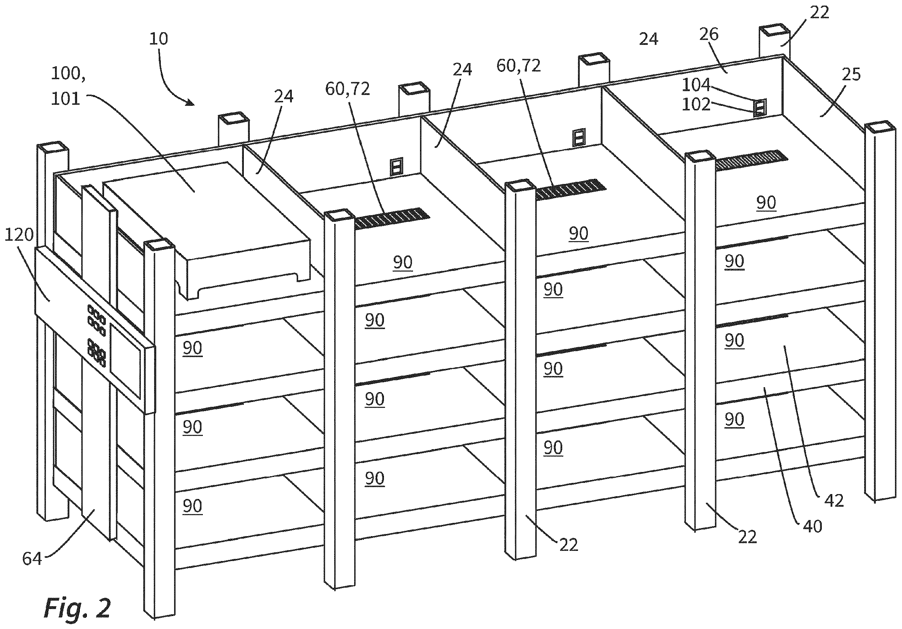

Fig. 2 zeigt bei zum Zwecke der Verdeutlichung abgenommener oberer Deckplatte nochmals das Lagersystem 10 der Fig. 1. Es ist ersichtlich, dass das Lagersystem 10 aus einer Mehrzahl vertikaler Säulen in Art von Hohlprofilen gebildet wird, an denen Zwischenböden 40 befestigt sind. Die Lagerbereiche 90 sind durch Trennwandungen 24 gegeneinander abgegrenzt. Linksseitig und rechtsseitig sowie rückseitig sind die Lagerbereiche 90 durch Wandungen 25, 26 begrenzt.

Ein jeder Lagerbereich 90 verfügt über einen Ladeanschluss 102 sowie eine Datenschnittstelle 104. Über den Ladeanschluss 102 und ein hierfür vorgesehenes, nicht abgebildetes Kabel können Fahrzeugantriebsbatterien 100 im gelagerten Zustand geladen werden bzw. es kann verhindert werden, dass eine angestrebte Mindestladung unterschritten wird. Über die Datenschnittstelle 104 und ein nicht dargestelltes Kabel können weiterhin Fahrzeugantriebsbatterien 100 bzw. Aufnahmebehälter 101 zur Aufnahme von Fahrzeugantriebsbatterien mit der zentralen Steuereinheit 120 verbunden werden. Hierdurch wird es möglich, dass die in entnehmbaren Aufnahmebehälter oder in die Fahrzeugantriebsbatterien selbst integrierten Sensoren zusätzliche Daten für die zentrale Steuereinheit 120 zur Verfügung stellen, beispielsweise Temperaturdaten oder Ladestandsdaten.

Der Tragboden 42, der die Lagerbereiche 90 nach unten begrenzt, ist jeweils mit einem Gasauslass 60 versehen, der jeweils durch eine als einstellbares Gitter ausgestaltete Drossel 72 gegenüber dem Lagerbereich 90 geöffnet, verengt oder geschlossen werden kann.

In Fig. 3 ist das Belüftungssystem ausgehend von den Gasauslässen 60 im geschnittenen Bereich gut zu erkennen. Die Gasauslässe 60 münden jeweils in einen gemeinsamen Gasabführungskanal 62, welcher innerhalb der als Doppelboden ausgebildeten Zwischenböden 40 angeordnet ist. Wie sich anhand der Fig. 3 ersehen lässt, werden diese gemeinsamen Gasabführungskanäle 62 einerseits durch einen die Lagerbereiche 90 nach oben abschließenden Deckenboden 46 sowie andererseits durch einen die Lagerbereiche 90 nach unten abschließenden Tragboden 42 begrenzt. An ihrem Bezug nehmend auf Fig. 3 linken Ende münden diese gemeinsamen Gasabführungskanäle 62 in einen Hauptgasabführungskanal 64, der wiederum mit der Kühleinrichtung 132 und der Fördereinrichtung 134 verbunden ist.

Durch die Fördereinrichtung 134 wird Luft aus dem Hauptgasabführungskanal 64 angesogen, so dass mittelbar auch Luft aus den gemeinsamen Gasabführungskanälen 62 und damit aus den Lagerbereichen 90 angesogen wird.

Im Belüftungssystem ist eine Mehrzahl von Sensoren vorgesehen, wobei die nachfolgend beschriebene Anordnung als exemplarisch zu verstehen ist und eine Vielzahl von Variationen hierzu denkbar ist. Zunächst ist jedem Gasauslass 60 der Lagerbereiche 90 ein Temperatursensor 80 zugeordnet, durch den die hier ausströmende Luft gemessen wird. Der Temperatursensor 80 ist dabei jeweils so angeordnet, dass der durch ihn erfasste Temperaturwert ausschließlich oder überwiegend durch die aus dem jeweiligen Lagerbereich 90 durch den Gasauslass 60 ausströmende Luft beeinflusst wird.

In den gemeinsamen Gasabführungskanälen 62 sind Gasanalysesensoren 82 vorgesehen, die die Zusammensetzung des vorbeiströmenden Gases messen. Weiterhin sind hier ergänzende gemeinsame Temperatursensoren 83 vorgesehen. Der Hauptgasabführungskanal 64 weist darüber hinaus einen ergänzenden Gasanalysesensor 84 auf. Zusätzlich ist am Stirnende eines jeden durch den Tragboden 42 und die Deckenböden 46 begrenzten Freibereichs 50 ein weiterer Sensor 86 in Art einer Wärmebildkamera 87 vorgesehen. Diese Wärmebildkamera 87 ist so ausgerichtet, dass sie entlang des Freibereichs 50 die Tragböden unterhalb von vier Lagerbereiche und/oder die Deckenböden oberhalb von vier Lagerbereichen 90 überblickt und eine Temperaturänderung hier differenzierbar nach Lagerbereich ermitteln kann.

Die Daten aller Sensoren 80, 82, 83, 84, 86, 87 werden über ein nicht dargestelltes Leitungssystem, dessen Leitungen vorzugsweise ebenfalls in den Freibereichen 50 angeordnet sind, der zentralen Steuereinheit 120 zugeführt. Die zentrale Steuereinheit 120 kann über eine Leitung 122 mit einer Leitzentrale 124 verbunden sein, so dass Störungen im Bedarfsfalle an diese Leitzentrale 124 weitergegeben werden können. Insbesondere ist die Steuereinheit 120 jedoch dafür ausgebildet, auf verschiedene Weise Einfluss auf die Betriebsparameter des Lagersystems 10 zu nehmen, wenn die Daten der Sensoren dies als erforderlich erkennbar machen.

So kann ein Temperaturanstieg an den Sensoren 80 beispielsweise erkennbar machen, dass eine Fahrzeugantriebsbatterie 100 sich beim Laden stark erwärmt. Sofern der Temperaturanstieg sehr hoch ausfällt oder auch benachbarte Sensoren einen Temperaturanstieg melden, kann dies als möglicher Brand identifiziert werden. Über die Gasanalysesensoren 82 und 84 kann ermittelt werden, ob eine ungewöhnliche Konzentration eines aus einer Fahrzeugantriebsbatterie 100 austretenden Gases festzustellen ist.

Als mögliche Maßnahme können insbesondere als Klappen ausgebildete Drosseln 74 an den Enden der gemeinsamen Gasabführungskanäle 62 verstellt werden, um die Gasabführung aus einem Lagerbereich bzw. einer Reihe von Lagerbereichen zu erhöhen oder zu verringern. Bei Ausgestaltung der Drosseln 72 mit einem Stellmotor kann es auch möglich sein, individuell die Gasabführung aus einzelnen Lagerbereichen zu vergrößern oder zu verringern. Zudem kann die zentrale Steuereinheit 120 durch Steuern der Kühleinrichtung 132 und insbesondere der Fördereinrichtung 134 beeinflussen, welche Gasabfuhr aus den Lagerbereichen 90 insgesamt erfolgen soll. In Kombination mit der genannten Steuerbarkeit der Drosseln 72, 74 lässt sich somit individuell für jeden Lagerbereich die Belüftung steuern. Weiterhin kann die zentrale Steuereinheit auch den Ladestrom, der über den Ladeanschluss 102 abgegeben wird, verringern oder steigern im Lichte von Sensordaten.

Nicht dargestellt ist eine zentrale Besprenkelungsanlage bzw. dezentrale Besprenkelungsanlagen, die ebenfalls mit der zentralen Steuereinheit 120 verbunden sein können und es gestatten können, dass in einem ermittelten Brandfalle, zu erkennen an bestimmten Ausgasungen bzw. Temperaturerhöhungen, unmittelbar Brandbekämpfungsmaßnahmen eingeleitet werden.

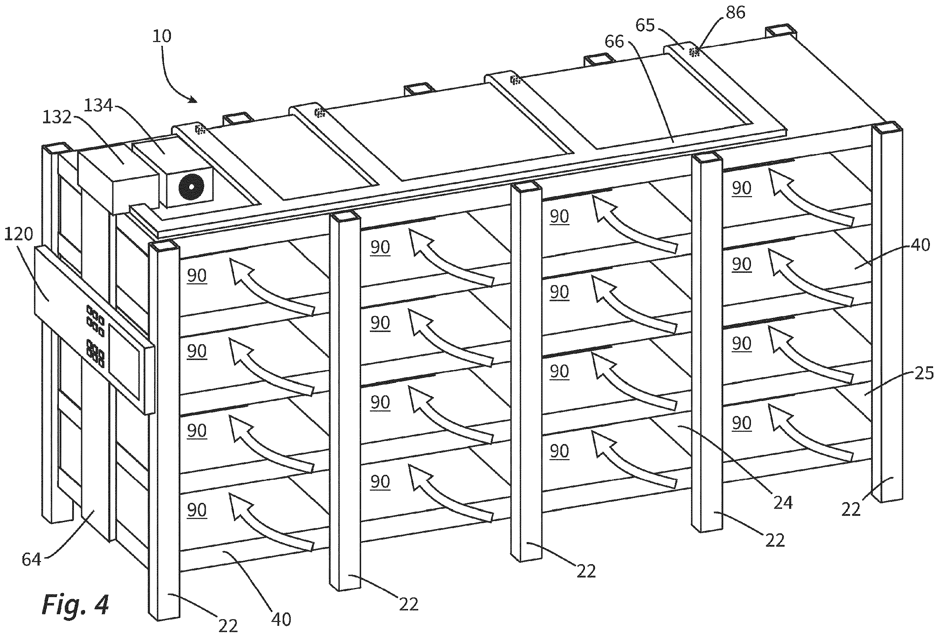

Fig. 4 zeigt eine alternative Variante des Lagersystems 10, welches sich durch die folgenden Merkmale von der Gestaltung der Fig. 1 bis 3 unterscheidet: Es ist zusätzlich zu den gemeinsamen horizontalen Gasabführungskanälen 62, an denen jeweils alle Lagerbereiche 90 einer horizontalen Reihe angeschlossen sind, eine Mehrzahl von gemeinsamen vertikalen Gasabführungskanälen 65 vorgesehen, an denen eine Mehrzahl von Lagerbereichen 90 einer vertikalen Reihe angeschlossen ist. Die gemeinsamen vertikalen Gasabführungskanäle 65 münden in einen gemeinsamen Hauptgasabführungskanal 66.

Bei einer solchen Gestaltung sind vorzugsweise alle Lagerbereiche 90 jeweils an zwei gemeinsamen Gasabführungskanälen 62, 65 angeschlossen, einem vertikalen und einem horizontalen.

Weiterhin ist korrespondierend zu den Gasanalysesensoren 82 und den Temperatursensoren 83 auch den vertikalen gemeinsamen Gasabführungskanälen 65 jeweils ein Sensor 86 zugeordnet, bei dem es sich vor allem um einen Gasanalysesensor und/oder einen Temperatursensor handeln kann.

Diese Anordnung gestattet es, mit einer vergleichsweise geringen Zahl von Sensoren, nämlich mindestens der Summe aus der Anzahl der vertikalen und der horizontalen Reihen von Lagerbereichen, Zustandsänderungen genau zuordnen zu können. Werden Werte, die auf eine Störung hinweisen, sowohl in einem vertikalen Gasabführungskanal 65 als auch in einem horizontalen Gasabführungskanal 62 ermittelt, so ist die Ursache hierfür vermutlich am Schnittpunkt der betroffenen vertikalen Reihe und der betroffenen horizontalen Reihe zu suchen.

Diese genaue Lokalisierung gestattet es, gezielt Maßnahmen zu ergreifen, beispielsweise die Luftzufuhr oder Luftabfuhr zu dem betroffenen Lagerbereich durch Einstellen der Drosseln 72, 74 spezifisch zu regeln. Sofern eine potentiell katastrophale Situation ermittelt wird, beispielsweise ein Brand oder das Austreten von Gas aus einer der Batterien, können auch weitergehende Maßnahmen auf Basis der Lokalisierung durchgeführt werden, wie insbesondere das gezielte Einleiten eines Löschvorgangs oder das manuelle oder automatisierte Herausholen der betroffenen Batterie aus dem Lagerbereich und die Verbringung in einen ungefährdeten Bereich.

Die genannten gemeinsamen vertikalen Gasabführungskanäle 65 und der Hauptgasabführungskanal 66 sind in nicht dargestellter Weise ähnlich den gemeinsamen horizontalen Gasabführungskanälen 62 und dem Hauptgasabführungskanal 64 mit Drosseln versehen, also manuell oder automatisiert steuerbaren Drosseln, die im Bereich von Durchbrechungen der Rückenwandung 26 zwischen den Lagerbereichen 90 einerseits und den gemeinsamen vertikalen Gasabführungskanälen 65 anderseits angeordnet sind und/oder die zwischen den gemeinsamen vertikalen Gasabführungskanälen 65 einerseits und dem Hauptgasabführungskanal 66 andererseits vorgesehen sind. Allerdings können die Kanäle 65 und 66 auch als reine Sensorkanäle ausgebildet sein, die ohne Drosseln auskommen und die nicht der Gasabführung zur Beeinflussung des Lagerbereichs dienen, sondern nur der beschriebenen Lokalisierung. In dem Falle kann ggf. auf die Drosseln verzichtet werden.

## Patentansprüche

1. Stationäres Lagersystem (10) für Fahrzeugantriebsbatterien (100), insbesondere für die Lagerung solcher Fahrzeugantriebsbatterien (100) vor Montage in einem Kraftfahrzeug im Zuge der Fahrzeugherstellung, mit den folgenden Merkmalen:
a. das Lagersystem (10) verfügt über eine Mehrzahl von Lagerbereichen (90) für Fahrzeugantriebsbatterien (100), die rasterartig nebeneinander und übereinander angeordnet sind und gegeneinander durch Trennwandungen (24) und Zwischenböden (40) abgegrenzt sind, und
b. das Lagersystem (10) verfügt über ein Belüftungssystem zur individuellen Gaszuführung und/oder Gasabsaugung aus den Lagerbereichen (90), **gekennzeichnet durch** folgende Merkmale:
c. das Lagersystem (10) verfügt über eine Mehrzahl von Gassensoren (80, 82, 83), die den individuellen Gaszuführungen bzw. Gasabsaugungen derart zugeordnet sind, dass mehrere Gassensoren (82, 83, 86) jeweils unterschiedlichen Untergruppen aus der Gesamtmenge der Lagerbereiche (90) zugeordnet sind, und
d. es ist jeweils ein gemeinsamer Gassensor (82, 83) einer horizontal ausgerichteten Reihe von Lagerbereichen (90) zugeordnet, und
e es ist jeweils ein gemeinsamer Gassensor (86) einer vertikal ausgerichteten Reihe von Lagerbereichen (90) zugeordnet.

2. Stationäres Lagersystem (10) für Fahrzeugantriebsbatterien (100) nach Anspruch 1 mit mindestens einem der folgenden zusätzlichen Merkmale:
a. bei mindestens einem Gassensor (82, 86) handelt es sich um einen Sensor (82, 86) zur Erkennung von Bestandteilen des aus dem Lagerbereich (90) abgesaugten Gasstroms, und/oder
b. bei mindestens einem Gassensor (80, 83, 86) handelt es sich um einen Temperatursensor (80, 83, 86) zur Erfassung der Temperatur des abgesaugten Gasstroms, und/oder
c. bei mindestens einem Gassensor handelt es sich um einen Durchflusssensor zur Erfassung des Volumenstroms des abgesaugten oder zugeführten Gasstroms.

3. Stationäres Lagersystem (10) für Fahrzeugantriebsbatterien (100) nach einem der vorstehenden Ansprüche mit den folgenden Merkmalen:
a. die Zwischenböden (40) sind zumindest zum Teil als Doppelböden mit einem oberen Tragboden (42) und einem unteren Deckenboden (46) ausgestaltet, zwischen denen ein Freibereich (50) vorgesehen ist.

4. Stationäres Lagersystem (10) für Fahrzeugantriebsbatterien (100) nach Anspruch 3 mit den folgenden zusätzlichen Merkmalen:
a. in einer Ebene sind mindestens zwei Lagerbereiche (90) horizontal nebeneinander angeordnet und durch eine Trennwandung (24) voneinander getrennt, und
b. der Freibereich (50) im Zwischenboden zwischen diesen mindestens zwei Lagerbereichen (90) ist als einheitlicher Freibereich (50) ohne trennende Zwischenwandung gestaltet, und
c. in diesem Freibereich (50) ist mindestens ein Sensor (86) angeordnet, der physikalische Größen der mindestens zwei Lagerbereiche erfasst, wobei insbesondere vorzugsweise der Sensor (86) durch eine Wärmebildkamera (87) gebildet wird, die derart ausgerichtet ist, dass die Erwärmung des Tragbodens (42) oberhalb der Freibereichs (50) oder des Deckenbodens (46) unterhalb des Freibereichs (50) nach dem Lagerbereich (90) differenzierbar erfasst werden kann.

5. Stationäres Lagersystem (10) für Fahrzeugantriebsbatterien (100) nach Anspruch 3 oder 4 mit dem folgenden zusätzlichen Merkmal:
a. zwischen dem Deckenboden (46) und dem Tragboden (42) des Zwischenbodens (40) ist ein Gaszuführungskanal oder ein Gasabführungskanal (62) angeordnet,
insbesondere mit den folgenden zusätzlichen Merkmalen:
b. die Zwischenböden (40) bilden, begrenzt durch ihren oberen Tragboden (42) und ihren unteren Deckenboden (46), den Gaszuführungskanal oder Gasabführungskanal (62).

6. Stationäres Lagersystem (10) für Fahrzeugantriebsbatterien (100) nach einem der vorstehenden Ansprüche mit den folgenden zusätzlichen Merkmalen:
a. die Lagerbereiche (90) einer horizontalen oder vertikalen Reihe von Lagerbereichen (90) weisen einen gemeinsamen Gaszuführungskanal oder Gasabführungskanal (62, 65) auf, und
b. jedem Lagerbereich (90) ist eine individuell einstellbare Drossel (72) zwischen dem gemeinsamen Gaszuführungskanal oder Gasabführungskanal (62) und dem Lagerbereich (90) zugeordnet, wobei die Drossel (72) zur manuellen oder motorischen Verstellung ausgebildet ist,
und/oder mit den folgenden zusätzlichen Merkmalen
c. mehrere gemeinsame Gaszuführungskanäle oder Gasabführungskanäle (62, 65) jeweils einer Reihe von Lagerbereichen (90) sind mit einem Hauptgaszuführungskanal oder Hauptgasabführungskanal (64, 66) verbunden, und
d. jedem gemeinsamen Gaszuführungskanal oder Gasabführungskanal (62) ist eine individuell einstellbare Drossel (74) zwischen dem gemeinsamen Gaszuführungskanal oder Gasabführungskanal (62) und dem Hauptgaszuführungskanal oder Hauptgasabführungskanal (64) zugeordnet, wobei die Drossel (74) zur manuellen oder motorischen Verstellung ausgebildet ist.

7. Stationäres Lagersystem (10) für Fahrzeugantriebsbatterien nach einem der vorstehenden Ansprüche mit dem folgenden zusätzlichen Merkmal:
a. das Lagersystem verfügt über einen offenen oder geschlossenen Kreislauf, innerhalb dessen aus einem Lagerbereich (90) abgesaugtes Gas zumindest teilweise und vorzugsweise nach einem Kühlvorgang den Lagerbereichen (90) wieder zugeführt wird.

8. Stationäres Lagersystem (10) für Fahrzeugantriebsbatterien (100) nach einem der vorstehenden Ansprüche mit dem folgenden zusätzlichen Merkmal:
a. die Lagerbereiche (90) sind jeweils mit einem Gasauslass (60) im Bereich eines Tragbodens (42) ausgestattet, wobei dieser vorzugsweise durch ein manuell einstellbares Drosselgitter abgedeckt ist.

9. Stationäres Lagersystem (10) für Fahrzeugantriebsbatterien (100) nach einem der vorstehenden Ansprüche mit den folgenden zusätzlichen Merkmalen:
a. die Lagerbereiche (90) sind jeweils durch Trennwandungen (24) gegen horizontal auf gleicher Ebene angeordnete benachbarte Lagerbereiche (90) abgegrenzt, durch Zwischenböden (40) gegen vertikal oberhalb bzw. unterhalb angeordnete benachbarte Lagerbereiche (90) abgegrenzt und rückseitig durch eine Rückenwandung (26) begrenzt, und
b. der Rückenwandung (26) gegenüberliegend sind die Lagerbereiche (90) nach vorne hin offen ausgebildet.

10. Stationäres Lagersystem (10) für Fahrzeugantriebsbatterien (100) nach einem der vorstehenden Ansprüche mit dem folgenden zusätzlichen Merkmal:
a. den Lagerbereichen (90) ist jeweils zugeordnet:
- ein Ladeanschluss (102) zum Anschließen der Fahrzeugantriebsbatterie an ein Stromversorgungsnetz des Lagersystems (10), und/oder
- eine Datenschnittstelle (104) zur Kommunikation mit batterieinternen Steuergeräten und/oder Sensoren oder zur Kommunikation mit Aufnahmebehältern zur Aufnahme von Fahrzeugantriebsbatterien, und/oder
- eine individuelle Besprenkelungsanlage zum Löschen eines Batteriebrandes.

11. Stationäres Lagersystem (10) für Fahrzeugantriebsbatterien (100) nach einem der vorstehenden Ansprüche mit den folgenden zusätzlichen Merkmalen:
a. das Lagersystem (10) verfügt über eine zentrale Steuereinheit (120), die zur zentralen Entgegennahme der Daten der Gassensoren (80, 82, 84, 86) und ggf. weiterer Sensoren (86) ausgebildet ist,
vorzugsweise mit mindestens einem der zusätzlichen Merkmale:
b. die zentrale Steuereinheit (120) ist zur Weitergabe der entgegengenommenen Daten oder hieraus gewonnener resultierender Daten an eine zentrale Leitzentrale (124) oder Brandmeldezentrale ausgebildet und/oder
c. die zentrale Steuereinheit (120) ist zur Steuerung der motorisch einstellbaren Drosseln (72, 74) vorgesehen, die den Lagerbereichen (90) zugeordnet sind und/oder die den Gaszuführungskanälen oder Gasabführungskanälen (62, 64, 65, 66) zugeordnet sind und/oder
d. die zentrale Steuereinheit (120) ist zur Steuerung mindestens einer Fördereinrichtung (134) ausgebildet, mittels derer Gas aus einem Lagerbereich (90) abgeführt oder dem Lagerbereich (90) zugeführt werden kann und/oder
e. die zentrale Steuereinheit (120) ist zur Steuerung mindestens einer Besprenkelungsanlage ausgebildet und/oder
f. die zentrale Steuereinheit (120) ist zur Steuerung mindestens einer Kühleinrichtung (132) ausgebildet.

12. Stationäres Lagersystem (10) für Fahrzeugantriebsbatterien (100) nach Anspruch 11 mit den folgenden zusätzlichen Merkmalen:
a. die zentrale Steuereinheit (120) ist mit mindestens einer der folgenden Verhaltensweise ausgebildet:
- in Reaktion auf eine Erwärmung einer Fahrzeugantriebsbatterie in einem Lagerbereich (90), die mittels eines Sensors (83, 86) erfasst wird, wird die Gaszuführung oder die Gasabführung in diesen Lagerbereich (90) oder in eine vertikale oder horizontale Reihe, in der dieser Lagerbereich angeordnet ist, erhöht, und/oder
- in Reaktion auf eine Erwärmung in einem Lagerbereich (90), die mittels eines Sensors (83) erfasst wird, oder in Reaktion auf die Erfassung einer Konzentration eines Gases im abgeführten Gas, die mittels eines Sensors (80, 82, 84, 86) erfasst wird und die oberhalb eines hierfür festgesetzten Grenzwertes liegt, oder in Reaktion auf einen Volumenstrom, der mittels eines Sensors erfasst wird und der oberhalb oder unterhalb von hierfür jeweils festgesetzten Grenzwerten liegt, wird die Gaszuführung oder die Gasabführung in diesen Lagerbereich (90) oder in eine vertikale oder horizontale Reihe, in der dieser Lagerbereich angeordnet ist, verringert oder unterbunden, und/oder eine Besprenkelungsanlage aktiviert.

13. Stationäres Lagersystem (10) für Fahrzeugantriebsbatterien (100) nach Anspruch einem der vorstehenden Ansprüche mit mindestens einem derfolgenden zusätzlichen Merkmale:
a. das Lagersystem (10) ist als Regalsystem ausgebildet und weist auf einer Mehrzahl von Ebenen jeweils eine Mehrzahl von voneinander durch Trennwandungen (24) getrennte Lagerbereiche (90) auf, wobei das Regalsystem vorzugsweise mindestens drei Ebenen mit jeweils mindestens drei nebeneinander angeordneten Lagerbereichen (90) aufweist, und/oder
b. jeder Lagerbereich (90) ist zur vollständigen Aufnahme mindestens einer Fahrzeugantriebsbatterie (100) oder einer Fahrzeugantriebsbatterie (100) in einem hierfür vorgesehenen Aufnahmebehälter (101) vorgesehen, wobei der Lagerbereich (90) hierzu Mindestmaße von 150cm x 100cm x 20cm aufweist.

14. Stationäres Lagersystem (10) für Fahrzeugantriebsbatterien (100) nach einem der vorstehenden Ansprüche mit mindestens einem der folgenden zusätzlichen Merkmale:
a. die Trennwandungen (24), die Rückenwandung (26) und/oder die Zwischenböden (40) sind aus einem feuerhemmenden Material hergestellt.

## Claims

1. Stationary storage system (10) for vehicle drive batteries (100), in particular for storing such vehicle drive batteries (100) before installation in a motor vehicle within the course of the production of the vehicle, having the following features:
a. the storage system (10) has a multiplicity of storage areas (90) for vehicle drive batteries (100) which are arranged one next to the other and one above the other in a grid-like fashion and are delimited from one another by dividing walls (24) and intermediate floors (40),
and
b. the storage system (10) has a ventilation system for individually feeding in gas and/or discharging gas from the storage areas (90), **characterized by** the following features:
c. the storage system (10) has a multiplicity of gas sensors (80, 82, 83) which are assigned to the individual gas feeds and/or gas discharge elements in such a way that a plurality of gas sensors (82, 83, 86) are respectively assigned to different subgroups of the total number of storage areas (90), and
d. a common gas sensor (82, 83) is respectively assigned to a horizontally oriented row of storage areas (90), and
e. a common gas sensor (86) is respectively assigned to a vertically oriented row of storage areas (90) .

2. Stationary storage system (10) for vehicle drive batteries (100) according to Claim 1, having at least one of the following additional features:
a. at least one gas sensor (82, 86) is a sensor (82, 86) for detecting components of the gas stream which is sucked in from the storage area (90), and/or
b. at least one gas sensor (80, 83, 86) is a temperature sensor (80, 83, 86) for sensing the temperature of the sucked out gas stream and/or
c. at least one gas sensor is a flow sensor for sensing the volume flow of the sucked out or fed in gas stream.

3. Stationary storage system (10) for vehicle drive batteries (100) according to one of the preceding claims, having the following features:
a. the intermediate floors (40) are at least configured as double floors with an upper supporting floor (42) and a lower sealing floor (46), between which a free area (50) is provided.

4. Stationary storage system (10) for vehicle drive batteries (100) according to Claim 3 having the following additional features:
a. at least two storage areas (90) are arranged horizontally one next to the other and separated from one another by a dividing wall (24) in a plane, and
b. the free area (50) in the intermediate floor between these at least two storage areas (90) is configured as a uniform free area (50) without a separating intermediate floor, and
c. in this free area (50), at least one sensor (86) is arranged which senses physical variables of the at least two storage areas, wherein in particular preferably the sensor (86) is formed by a thermal imaging camera (87) which is configured in such a way that the heating of the supporting floor (42) above the free area (50) or the sealing floor (46) below the free area (50) can be sensed in a way which can be differentiated according to the storage area (90) .

5. Stationary storage system (10) for vehicle drive batteries (100) according to Claim 3 or 4 having the following additional feature:
a. a gas feed duct or a gas discharge duct (62) is arranged between the sealing floor (46) and the supporting floor (42) of the intermediate floor (40),
in particular having the following additional features:
b. the intermediate floors (40) form the gas feed duct or gas discharge duct (62) while being bounded by their upper supporting floor (42) and their lower sealing floor (46).

6. Stationary storage system (10) for vehicle drive batteries (100) according to one of the preceding claims, having the following additional features:
a. the storage areas (90) of a horizontal or vertical row of storage areas (90) have a common gas feed duct or gas discharge duct (62, 65),
and
b. each storage area (90) is assigned an individually adjustable throttle (72) between the common gas feed duct or gas discharge duct (62) and the storage area (90), wherein the throttle (72) is designed for manual or motor-operated adjustment,
and/or having the following additional features
c. a plurality of common gas feed ducts or gas discharge ducts (62, 65), each of a row of storage areas (90), are connected to a main gas feed duct or main gas discharge duct (64, 66), and
d. each common gas feed duct or gas discharge duct (62) is assigned an individually adjustable throttle (74) between the common gas feed duct or gas discharge duct (62) and the main gas feed duct or main gas discharge duct (64), wherein the throttle (74) is designed for manual or motor-operated adjustment.

7. Stationary storage system (10) for vehicle drive batteries according to one of the preceding claims having the following additional feature:
a. the storage system has an open or closed circuit within which gas sucked out of a storage area (90) is fed back to the storage areas (90) at least partially and preferably after a cooling process.

8. Stationary storage system (10) for vehicle drive batteries (100) according to one of the preceding claims, having the following additional feature:
a. the storage areas (90) are each equipped with a gas outlet (60) in the region of a supporting floor (42), wherein said gas outlet (60) is preferably covered by a manually adjustable throttle grating.

9. Stationary storage system (10) for vehicle drive batteries (100) according to one of the preceding claims, having the following additional features:
a. the storage areas (90) are each bounded by dividing walls (24) with respect to adjacent storage areas (90) which are arranged horizontally on the same level, are bounded by intermediate floors (40) with respect to adjacent storage areas (90) which are arranged vertically above or below, and are delimited at the rear by a rear wall (26), and
b. opposite the rear wall (26), the storage areas (90) are formed open toward the front.

10. Stationary storage system (10) for vehicle drive batteries (100) according to one of the preceding claims, having the following additional feature:
a. the storage areas (90) are each assigned:
- a charging connection (102) for connecting the vehicle drive battery to a power supply grid of the storage system (10), and/or
- a data interface (104) for communicating with battery-internal control devices and/or sensors or for communicating with receptacle containers for receiving vehicle drive batteries, and/or
- an individual sprinkling system for extinguishing a battery fire.

11. Stationary storage system (10) for vehicle drive batteries (100) according to one of the preceding claims, having the following additional features:
a. the storage system (10) has a central control unit (120) which is designed to carry out centralized reception of the data of the gas sensors (80, 82, 84, 86) and of further sensors (86) if appropriate,
preferably having at least one of the additional features:
b. the central control unit (120) is designed to pass on the received data or resulting data acquired therefrom to a central control centre (124) or central fire alarm system, and/or
c. the central control unit (120) is provided for controlling the throttles (72, 74) which can be adjusted by a motor and which are assigned to the storage areas (90) and/or which are assigned to the gas feed ducts or gas discharge ducts (62, 64, 65, 66), and/or
d. the central control unit (120) is designed to control at least one feed device (134) by means of which gas can be discharged from a storage area (90) or can be fed to the storage area (90), and/or
e. the central control unit (120) is designed to control at least one sprinkling system, and/or
f. the central control unit (120) is designed to control at least one cooling device (132).

12. Stationary storage system (10) for vehicle drive batteries (100) according to Claim 11, having the following additional features:
a. the central control unit (120) is designed with at least one of the following behaviours:
- in reaction to heating of a vehicle drive battery in a storage area (90), sensed by means of a sensor (83, 86), the feeding of gas or the discharging of gas into this storage area (90) or into a vertical or horizontal row in which this storage area is arranged is increased, and/or
- in reaction to heating in a storage area (90) sensed by means of a sensor (83) or in reaction to the sensing of a concentration of a gas in the discharged gas, which is sensed by means of a sensor (80, 82, 84, 86) and lies above a limiting value which is set for this, or in reaction to a volume flow which is sensed by means of a sensor and which lies above or below limiting values which are respectively set for this, the feeding of gas or the discharging of gas into this storage area (90) or into a vertical or horizontal row in which this storage area is arranged is reduced or shut down and/or a sprinkling system is activated.

13. Stationary storage system (10) for vehicle drive batteries (100) according to one of the preceding claims having at least one of the following additional features:
a. the storage system (10) is embodied as a shelf system and has in each of a multiplicity of planes a multiplicity of storage areas (90) which are separated from one another by dividing walls (24), wherein the storage system preferably has at least three planes, each with at least three storage areas (90) which are arranged one next to the other,
and/or
b. each storage area (90) is provided for completely receiving at least one vehicle drive battery (100) or one vehicle drive battery (100) in a receptacle container (101) provided for this purpose, wherein the storage area (90) has minimum dimensions of 150 cm x 100 cm x 20 cm for this purpose.

14. Stationary storage system (10) for vehicle drive batteries (100) according to one of the preceding claims, having at least one of the following additional features:
a. the dividing walls (24), the rear wall (26) and/or the intermediate floors (40) are manufactured from a fire retardant material.

## Revendications

1. Système de stockage (10) stationnaire pour batteries de traction de véhicule (100), notamment pour le stockage de telles batteries de traction de véhicule (100) avant le montage dans un véhicule automobile dans le cadre de la fabrication d'un véhicule, ayant les caractéristiques suivantes :
a. le système de stockage (10) dispose d'une pluralité de zones de stockage (90) pour des batteries de traction de véhicule (100), lesquelles sont disposées les unes à côté des autres et les unes au-dessus des autres à la manière d'une grille et sont délimitées les unes des autres par des parois de séparation (24) et des fonds intermédiaires (40), et
b. le système de stockage (10) dispose d'un système de ventilation servant à l'amenée de gaz et/ou à l'aspiration de gaz individuelle hors des zones de stockage (90),
**caractérisé par** les caractéristiques suivantes :
c. le système de stockage (10) dispose d'une pluralité de capteurs de gaz (80, 82, 83) qui sont associés aux amenées de gaz ou aux aspirations de gaz individuelles de telle sorte que plusieurs capteurs de gaz (82, 83, 86) sont respectivement associés à des sous-groupes différents de l'ensemble total des zones de stockage (90), et
d. un capteur de gaz commun (82, 83) est respectivement associé à une rangée orientée horizontalement de zones de stockage (90), et
e. un capteur de gaz commun (86) est respectivement associé à une rangée orientée verticalement de zones de stockage (90).

2. Système de stockage (10) stationnaire pour batteries de traction de véhicule (100) selon la revendication 1, ayant au moins l'une des caractéristiques supplémentaires suivantes :
a. au moins un capteur de gaz (82, 86) est un capteur (82, 86) destiné à reconnaître des éléments constitutifs du flux de gaz aspiré hors de la zone de stockage (90), et/ou
b. au moins un capteur de gaz (80, 83, 86) est un capteur de température (80, 83, 86) destiné à détecter la température du flux de gaz aspiré, et/ou
c. au moins un capteur de gaz est un capteur de débit destiné à détecter le débit volumique du flux de gaz aspiré ou amené.

3. Système de stockage (10) stationnaire pour batteries de traction de véhicule (100) selon l'une des revendications précédentes, ayant les caractéristiques suivantes :
a. les fonds intermédiaires (40) sont au moins partiellement réalisés sous la forme de doubles fonds avec un fond porteur supérieur (42) et un fond de plancher inférieur (46), entre lesquels se trouve une zone libre (50) .

4. Système de stockage (10) stationnaire pour batteries de traction de véhicule (100) selon la revendication 3, ayant les caractéristiques supplémentaires suivantes :
a. au moins deux zones de stockage (90) sont disposées horizontalement dans un plan l'une à côté de l'autre et séparées l'une de l'autre par une paroi de séparation (24), et
b. la zone libre (50) dans le fond intermédiaire entre ces au moins deux zones de stockage (90) est réalisée sous la forme d'une zone libre (50) uniforme sans paroi intermédiaire de séparation, et
c. au moins un capteur (86) est disposé dans cette zone libre (50), lequel détecte des grandeurs physiques des au moins deux zones de stockage, le capteur (86) plus particulièrement de préférence formé par une caméra d'imagerie thermique (87) qui est orientée de telle sorte que l'échauffement du fond porteur (42) au-dessus de la zone libre (50) ou du fond de plancher (46) au-dessous de la zone libre (50) peut être détecté avec différenciation d'après la zone de stockage (90).

5. Système de stockage (10) stationnaire pour batteries de traction de véhicule (100) selon la revendication 3 ou 4, ayant la caractéristique supplémentaire suivante :
a. un canal d'amenée de gaz ou un canal d'évacuation de gaz (62) est disposé entre le fond de plancher (46) et le fond porteur (42) du fond intermédiaire (40), ayant notamment les caractéristiques supplémentaires suivantes :
b. les fonds intermédiaires (40), séparés par leur fond porteur (42) supérieur et leur fond de plancher (46) inférieur, forment le canal d'amenée de gaz ou le canal d'évacuation de gaz (62).

6. Système de stockage (10) stationnaire pour batteries de traction de véhicule (100) selon l'une des revendications précédentes, ayant les caractéristiques supplémentaires suivantes :
a. les zones de stockage (90) d'une rangée horizontale ou verticale de zones de stockage (90) présentent un canal d'amenée de gaz ou un canal d'évacuation de gaz (62, 65) commun, et
b. à chaque zone de stockage (90) est associé un obturateur (72) réglable individuellement entre le canal d'amenée de gaz ou le canal d'évacuation de gaz (62) commun et la zone de stockage (90), l'obturateur (72) étant configuré pour un positionnement manuel ou motorisé, et/ou ayant les caractéristiques supplémentaires suivantes
c. plusieurs canaux d'amenée de gaz ou canaux d'évacuation de gaz (62, 65) communs respectivement d'une rangée de zones de stockage (90) sont reliés à un canal d'amenée de gaz principal ou un canal d'évacuation de gaz principal (64, 66), et
d. à chaque canal d'amenée de gaz ou canal d'évacuation de gaz (62) commun est associé un obturateur (74) réglable individuellement entre le canal d'amenée de gaz ou le canal d'évacuation de gaz (62) commun et le canal d'amenée de gaz principal ou le canal d'évacuation de gaz principal (64), l'obturateur (74) étant configuré pour un positionnement manuel ou motorisé.

7. Système de stockage (10) stationnaire pour batteries de traction de véhicule selon l'une des revendications précédentes, ayant la caractéristique supplémentaire suivante :
a. le système de stockage dispose d'un circuit ouvert ou fermé à l'intérieur duquel le gaz aspiré hors d'une zone de stockage (90) est au moins partiellement de nouveau amené aux zones de stockage (90) et de préférence après une opération de refroidissement.

8. Système de stockage (10) stationnaire pour batteries de traction de véhicule (100) selon l'une des revendications précédentes, ayant la caractéristique supplémentaire suivante :
a. les zones de stockage (90) sont respectivement équipées d'une sortie de gaz (60) dans la zone d'un fond porteur (42), celle-ci étant de préférence recouverte d'une grille d'étranglement réglable manuellement.

9. Système de stockage (10) stationnaire pour batteries de traction de véhicule (100) selon l'une des revendications précédentes, ayant les caractéristiques supplémentaires suivantes :
a. les zones de stockage (90) sont respectivement délimitées par des parois de séparation (24) des zones de stockage (90) voisines disposées horizontalement sur le même plan, délimitées par des fonds intermédiaires (40) des zones de stockage (90) voisines disposées verticalement au-dessus ou au-dessous et à l'arrière par une paroi arrière (26), et
b. les zones de stockage (90) sont configurées ouvertes vers l'avant à l'opposé de la paroi arrière (26).

10. Système de stockage (10) stationnaire pour batteries de traction de véhicule (100) selon l'une des revendications précédentes, ayant la caractéristique supplémentaire suivante :
a. aux zones de stockage (90) est respectivement associée :
- une borne de charge (102) destinée au raccordement de la batterie de traction de véhicule à un réseau d'alimentation électrique du système de stockage (10), et/ou
- une interface de données (104) destinée à la communication avec des contrôleurs et/ou des capteurs internes aux batteries ou à la communication avec des récipients d'accueil destinés à accueillir des batteries de traction de véhicule, et/ou
- une installation d'aspersion d'eau individuelle destinée à éteindre un feu de batterie.

11. Système de stockage (10) stationnaire pour batteries de traction de véhicule (100) selon l'une des revendications précédentes, ayant les caractéristiques supplémentaires suivantes :
a. le système de stockage (10) dispose d'une unité de commande centrale (120) qui est configurée pour la réception centrale des données des capteurs de gaz (80, 82, 84, 86) et éventuellement de capteurs supplémentaires (86),
de préférence ayant au moins l'une des caractéristiques supplémentaires :
b. l'unité de commande centrale (120) est configurée pour la retransmission des données reçues ou des données résultantes qui sont obtenues à partir de celles-ci à une centrale de commande (124) ou une centrale d'alarme incendie et/ou
c. l'unité de commande centrale (120) est configurée pour commander les obturateurs (72, 74) réglables de manière motorisée qui sont associés aux zones de stockage (90) et/ou qui sont associés aux canaux d'amenée de gaz ou aux canaux d'évacuation de gaz (62, 64, 65, 66) et/ou
d. l'unité de commande centrale (120) est configurée pour commander au moins un dispositif de transport (134) au moyen duquel le gaz peut être évacué hors d'une zone de stockage (90) et peut être amené à la zone de stockage (90) et/ou
e. l'unité de commande centrale (120) est configurée pour commander au moins une installation d'aspersion d'eau et/ou
f. l'unité de commande centrale (120) est configurée pour commander au moins un dispositif de refroidissement (132) .

12. Système de stockage (10) stationnaire pour batteries de traction de véhicule (100) selon la revendication 11, ayant les caractéristiques supplémentaires suivantes :
a. l'unité de commande centrale (120) est configurée avec au moins l'un des comportements suivants :
- en réaction à un échauffement d'une batterie de traction de véhicule dans une zone de stockage (90), lequel est détecté au moyen d'un capteur (83, 86), l'amenée de gaz ou l'évacuation de gaz dans cette zone de stockage (90) ou dans une rangée verticale ou horizontale dans laquelle est disposée cette zone de stockage est augmentée, et/ou
- en réaction à un échauffement dans une zone de stockage (90), lequel est détecté au moyen d'un capteur (83), ou en réaction à la détection d'une concentration d'un gaz dans le gaz évacué, laquelle est détectée au moyen d'un capteur (80, 82, 84, 86) et laquelle est supérieure à une valeur limite spécifiée à cet effet, ou en réaction à un débit volumique, lequel est détecté au moyen d'un capteur et lequel est supérieur ou inférieur à des valeurs limites respectivement spécifiées à cet effet, l'amenée de gaz ou l'évacuation de gaz dans cette zone de stockage (90) ou dans une rangée verticale ou horizontale dans laquelle est disposée cette zone de stockage est réduite ou inhibée, et/ou une installation d'aspersion d'eau est activée.

13. Système de stockage (10) stationnaire pour batteries de traction de véhicule (100) selon l'une des revendications précédentes, ayant au moins l'une des caractéristiques supplémentaires suivantes :
a. le système de stockage (10) est réalisé sous la forme d'un système de rayonnage et possède, sur une pluralité de plans, respectivement une pluralité de zones de stockage (90) séparées les unes des autres par des parois de séparation (24), le système de rayonnage possédant de préférence au moins trois plans comportant respectivement au moins trois zones de stockage (90) disposées les unes à côté des autres, et/ou
b. chaque zone de stockage (90) est conçue pour accueillir au moins une batterie de traction de véhicule (100) ou une batterie de traction de véhicule (100) dans un récipient d'accueil (101) prévu à cet effet, la zone de stockage (90) présentant à cet effet des cotes minimales de 150 cm x 100 cm x 20 cm.

14. Système de stockage (10) stationnaire pour batteries de traction de véhicule (100) selon l'une des revendications précédentes, ayant au moins l'une des caractéristiques supplémentaires suivantes :
a. les parois de séparation (24), la paroi arrière (26) et/ou les fonds intermédiaires (40) sont fabriqués dans un matériau ininflammable.
